# EUROPEAN PATENT SPECIFICATION

(11) **EP 4 170 205 B1**
(45) Date of publication and mention of the grant of the patent: **09.10.2024**
(21) Application number: 21204482.0
(22) Date of filing: 25.10.2021
(51) Int. Cl.: F16H 63/36, F16H 63/38, F16H 63/30

(54) **GEARBOX ACTUATOR USING A DUAL-PURPOSE DETENT PIN**
GETRIEBEAKTUATOR MIT BEIDSEITIG WIRKENDEN RASTSTIFT
BOÎTE DE VITESSES UTILISANT UNE GOUPILLE D'ARRÊT À DOUBLE USAGE

(43) Date of publication of application: 26.04.2023
(73) Proprietor: ZF CV Systems Europe BV, 1170 Brussels (BE)
(72) Inventor: SAWICKI, Ernest, 66-450 Bogdaniec (PL); ZELEK, Jedrzej, 51-163 WROCLAW (PL)
(74) Representative: Ohlendorf, Henrike

(56) References cited:
- EP-A1- 1 626 209
- DE-U1- 8 122 318
- FR-A1- 2 780 475
- JP-U- S55 134 619
- US-A- 2 350 506
- US-A- 2 953 035

## Description

### TECHNIAL FIELD OF THE INVENTION

The present invention relates to a gearbox actuator using a dual-purpose detent pin. In particular, the dual-purpose detent pin not only prevents an undesired or unanticipated linear movement of a push rod within the gearbox actuator, but also prevents relative movement between two push rods of the gearbox actuator.

### BACKGROUND OF THE INVENTION

Detent pins have been conventionally used as part of the gearbox actuators. Some existing solutions related to the conventional detent pins can be found in the patent publications such as DE9105258U1, DE102014213599A1, DE102015223036A1, DE19954386A1, DE20103393U1, DE4215187A1, DE19648856A1, and DE9319480U1.

FR2780475A1 relates to a mechanical gearbox ball type locking device comprising three parallel fork spindles arranged in a triangle and individually movable between stable positions determined by ball notches. The ball cartridges engage the notches to ensure the locking of the fork spindles. There are only two ball cartridges arranged so as to ensure simultaneous balling of the three fork spindles and the relative locking of the spindles on the adjacent gear change lines.

EP1626209A1 relates to a shifting device with detent and interlock unit, which comprises a first selector fork with a first locking unit and a second selector fork with a second locking unit. Both locking units are equipped with a spring supported locking element engaging with a complementary recess and causing the affected selector fork to move into a neutral position. A locking device is positioned between the locking element of the first unit and the locking element of the second unit keeping the first selector fork in the neutral position when the second fork is moved.

JPS55134619U relates to a restraining device between working shafts used for a transmission gear sliding mechanism of a transmission, a switching mechanism of a direction switching valve, and the like.

A pneumatically actuated gearbox for commercial vehicles may include one or more pneumatic actuators which are cylindrical in shape. Said pneumatic actuator includes a piston and a connecting rod attached to the piston.

As the piston linearly reciprocates within the pneumatic actuator, it results in the linearly reciprocating movement of the connecting rod. The connecting rod via downstream elements such as dog-clutch or synchronizers is connected to gear shafts where plurality of gears of the vehicle gearbox are provided. However, from the perspective of a gearbox and/or gearbox actuator manufacturer, it is imperative to prevent any accidental or unanticipated movement of the connecting rod of any single pneumatic actuator or relative movement between connecting rods (plural) associated with different pneumatic actuators within the gearbox actuator. As a consequence, no accidental engagement or disengagement of the gears occurs within the gearbox.

The present invention relates to one such fail-safe element provided within the gearbox actuators as there is a need for alternatives and/or further improvements to the existing solutions.

### SUMMARY OF THE PRESENT INVENTION

According to the present invention, the above mentioned problem is solved by a gearbox actuator according to claim 1.

Preferred embodiments of the present invention are laid down in the dependent claims.

In accordance with an embodiment of the present invention a gearbox actuator comprising a dual-purpose detent pin is disclosed. Within the scope of the present invention, the term "dual-purpose detent pin" may be understood as follows.

Using detent pins to stop or inhibit or prohibit undesired movement of the respective shafts within the gearbox actuators are known (see the above background section). However, the dual-purpose detent pin of the present invention not only prevents the movement of an individual shaft of the gearbox actuator, but also prevents "relative" movement of a first shaft of the gearbox actuator with respect to the second shaft of the gearbox actuator. Further details and the detailed technical benefits of having such a dual-purpose detent pin, which is part of the gearbox actuator, as per the present invention will be explained in detail in association with detailed embodiments.

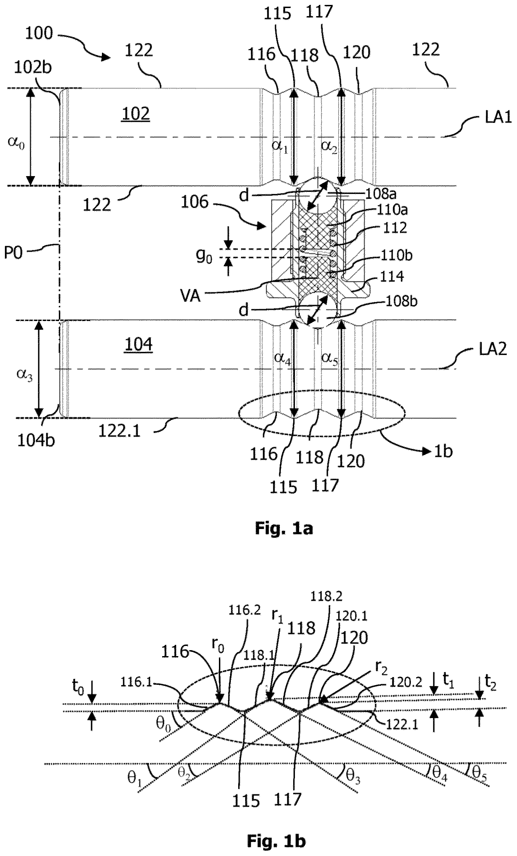

Accordingly, the dual-purpose detent pin, which is part of the gearbox actuator of the present invention, in accordance with an embodiment comprises two linearly reciprocating detent balls capable of linearly reciprocating along a vertical axis and are provided at opposite ends of the dual-purpose detent pin. In this regard, the "opposing ends" of the dual-purpose detent pin may refer to vertically opposite sides of a vertical axis (see e.g., reference sign "VA" in Figs. 1a, 2, 3, 4) running through the dual-purpose detent pin.

The dual-purpose detent pin also includes a first and second holding structures for holding the two linearly reciprocating detent balls, respectively and are capable of linearly reciprocating along the vertical axis. According to the present invention, the first and second holding structures are capable of linearly reciprocating along the vertical axis in tandem with the two linearly reciprocating detent balls.

Furthermore, the dual-purpose detent pin of the present invention further comprises a spring being in contact with both the first and second holding structures, and is configured to allow a pre-determined range of linearly reciprocating opposing motion of at least one of the first and second holding structures and at least one of the two linearly reciprocating detent balls along the vertical axis.

The technical advantage of the dual-purpose detent pin according to the present embodiment as explained above and defined in claim 1 is that a single detent pin is used to prevent accidental (linear) movement of e.g., two shafts or gearshift rods provided in the gearbox actuator either separately or relative to each other.

In real-time application or use, as may also become apparent in the discussion of the further advantageous embodiments, the dual-purpose detent pin prevents accidental engagement of the incorrect gears (i.e., the gear not chosen or intended to be chosen by the vehicle operator) in a vehicle transmission caused due to the movement of the shafts associated with e.g., two pneumatic actuators in either of the directions of their movement. Such accidental movements of the shafts or rods associated with the pneumatic actuators of the gearbox may happen due faulty actuation of solenoid valves that control the flow of pressurized air into and out of the pneumatic actuators. Needless to say, as an element of fool-proof design of the gearbox actuators that such accidental movements of the shafts associated with the pneumatic actuators should be prevented. The dual-purpose detent pin of the present invention according to claim 1 enables such fool-proof design in accordance with an embodiment of the present invention.

In accordance with a preferred embodiment of the present invention, the first and second holding structures are separated by a predetermined gap, when the spring is in an extended state. In the present embodiment, the term "extended state" may be considered a state of the spring where it experiences relatively less compressive force. Furthermore, in the present illustrative embodiment, the predetermined gap may appear necessary in order to make the two linearly reciprocating detent balls of the dual-purpose detent pin be in contact with an external surface of each of the shafts (regardless of the profile of the external surface), whose accidental (linear) movement or whose relative movement with respect to each other should be prevented. Since this contact to the external surface of the each of the shafts should not be lost even when gear shifting i.e., the movement of the shafts do not occur, the predetermined gap helps maintaining contact with the external surface of the shafts with or without the tension in spring. The predetermining gap between the first and second holding structures is chosen taking the operating conditions of the dual-purpose detent pin into account.

In further preferred embodiments of the present invention, the dual-purpose detent pin further comprises an external sleeve to orient or align the two linearly reciprocating detent balls, the first and second holding structures, and the spring along the vertical axis. The sleeve that is discussed within the context of the present embodiment may simply be provided to keep the two linearly reciprocating detent balls and the first and second holding structures along the vertical axis.

In the same or different embodiments to the ones already discussed above, the dual-purpose detent pin is configured to prevent horizontal movement of at least one of two external shafts along their respective lateral axes depending on a relative axial position of one of the two external shafts along its lateral axis with respect to the axial position of the other of the two external shafts along its lateral axis. It is particularly advantageous that the dual-purpose detent pin in the present context can allow each of the two linearly reciprocating detent balls to selectively position itself in an appropriate provision provided in the two external shafts such that said horizontal movement of at least one of two external shafts along their respective lateral axes is prevented.

In conjunction with the dual-purpose detent pin of the previous embodiment discussed above, the relative axial position of one the two external shafts with respect to the other along its respective lateral axis or a relative difference in their respective axial positions along their respective lateral axes is correlated with the measure of physical distance between corresponding bottom surfaces of the two external shafts.

In the gearbox actuator according to the present invention, the each of the first and second external shafts comprises at least two crest-like and at least two trough-like sections on its outer surface. In accordance with the various embodiments of the present invention, the term "outer surface" should be read synonymously with the "external surface" in the context of the first and second external shafts. One of the technical purposes of having the crest-like and trough-like sections on the outer surface of the external shafts is to enable simplification of rolling of the two linearly reciprocating detent balls while at the same time the crest-like sections enable smoother application of compressive force on the spring of the dual-purpose detent pin.

According to an embodiment of the present invention, a first crest-like section of the each of the first and second external shafts is separated from a second crest-like section of the each of the first and second external shafts by a first trough-like section. This, as mentioned above, enables smoother transitory motion of the detent balls and furthermore is complementary to the profile or shape of each of the detent balls as it rolls or engages in transitory contact with the crest-and-trough-like sections along the external surface(s) of the first and second external shafts.

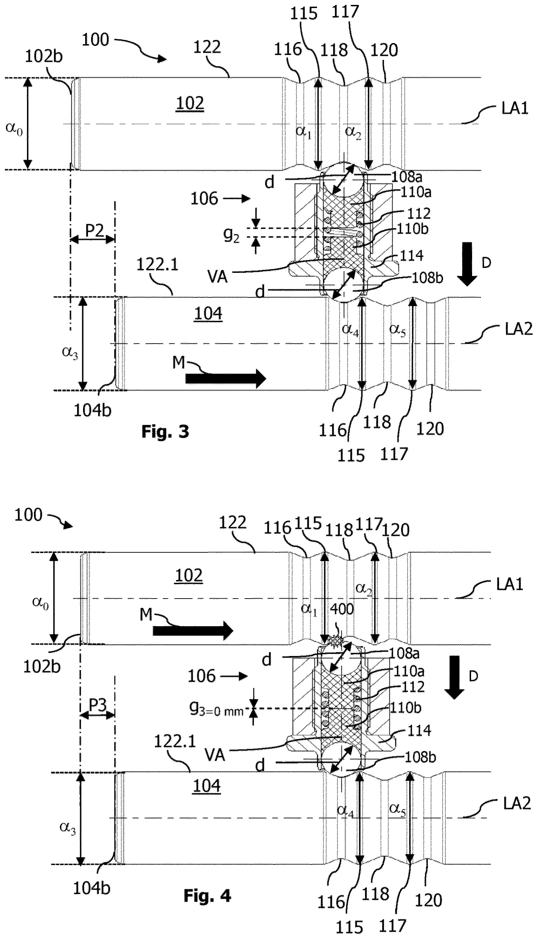

Furthermore, according to the present invention, a first diameter of the each of the first and second external shafts at the first crest-like section(s) is different from a second diameter at the second crest-like section(s) of the each of the first and second external shafts. The technical advantage of providing such different diameters at different sections of the first and second external shafts is to enable a locking feature in association with the dual-purpose detent pin of the present invention in that the predetermined gap or g₀ that exists between the first and second holding structures (at a certain state of operation of the gearbox actuator) may be reduced and/or increased if the diameters at the various sections of the first and second shafts are different. At a predefined situation, for instance, if the highest diameter at the crest-like section of the first external shaft coincides with the highest diameter at a crest-like section of the second external shaft (i.e., the relative position with respect to each other e.g., P3 in Fig. 4), the detent balls that are in contact with the crest-like sections of the first and second external shafts cannot roll further in at least one direction because the gap between the first and second holding structures become "0 mm" and the spring is fully compressed. More details on this would be explained further in association with the description provided for the accompanying drawings.

Moreover, a preferred embodiment provides for the option, in that radius of curvature r₀, r₁, or r₂ and/or a depth/ thickness t₀, t₁, t₂ and/or each of opposite inclined surfaces' 116.1, 116.2, 118.1, 118.2, 120.1, and 120.2 angle of inclination θ₀, θ₁, θ₂, θ₃, θ₄, and θ₅ at each of the at least two trough-like sections 116, 118 of the each of the first and second external shafts 102, 104 is different from or same as the other. Such a variety of parameters to control the blocking of the relative movement between shafts 102 and 104 and/or individual linear movement of shafts 102 and 104 along their respective lateral axes LA1 and LA2 provides a gear actuator designer with a tremendous amount of options in arriving at an optimal solution. For instance, in combination with the varying diameters at the different sections of the external shafts, the changes with respect to the radius of curvature at the each of the at least two trough-like sections allow for specific design options (i.e., the freedom to design is improved) to provide the locking feature between the two external shafts of the gearbox actuator.

According to a preferred embodiment of the present invention, the two linearly reciprocating detent balls of the dual-purpose detent pin are configured to be in transitory contact with at least one of said crest-like sections and with at least one of said trough-like sections of the first and second external shafts, respectively, when the axial position of at least one of the first and second external shafts changes with respect to another of the first and second external shafts. Such a transitory contact between the two linearly reciprocating detent balls and the different curves of the external or outer surface of the shafts reduces the need of tending to lubrication needs between the contacting surface areas. Furthermore, in the same embodiment, the spring is compressed when at least one of the two linearly reciprocating detent balls is moving from one of the trough-like sections towards or is at one of the crest-like sections of the first second external shafts.

Further, the gearbox actuator according to one of the previously discussed embodiments, a gap (g₀, g₁, g₂, g₃) between the first and second holding structures of the dual-purpose detent pin vary depending on the relative positions of the first and second external shafts. One of the technical advantages, as will be understood within the scope of the present invention, is to provide this varying gap between the two holding structures such that the compression of the spring between the two holding structures are only allowed to an extent whereas the compression beyond that gap will either result in blocking of the relative movement between the two external shafts or in allowing the relative movement. Furthermore, the gearbox actuator of the previous embodiment, the gap (g3) between the first and second holding structures becomes "0 mm" (no gap situation occurs), when a first of the two linearly reciprocating detent balls is initially engaged with a second trough-like section of the first external shaft, and when the linear translatory motion of the first external shaft in a first direction parallel to the respective lateral axis occurs such that the first of the two linearly reciprocating detent balls is made to roll towards a first crest-like section or a first crest-like section of the first external shaft. The technical purpose behind such a configuration is that, the designer is allowed to selectively prohibit the relative movement between the two external shafts only when said external shafts cause the change in the gears of the vehicle transmission and any reversal is prohibited. More precisely, the gap is made "0 mm" between the holding structures by adjusting the profiles of curves along the external surface of the external shafts only when certain linear translator motion between the shafts are to be prevented.

In accordance with an exemplary embodiment of the present invention, a vehicle gearbox comprising the gearbox actuator as explained in any of above embodiments. In a yet another embodiment of the present invention, a commercial vehicle comprising the vehicle gearbox is claimed. In a still another embodiment, use of the claimed gearbox actuator is defined in claim 12.

### BRIEF DESCRIPTION OF THE ACCOMPANYING DRAWINGS

Fig. 1a illustrates a dual-purpose detent pin and a part of a gearbox actuator in accordance with an embodiment of the present invention;
Fig. 1b illustrates a section of a second external shaft of a gearbox actuator in accordance with an embodiment of the present invention; and
Figs. 2 to 4 illustrates of working of a dual-purpose detent pin within a gearbox actuator in accordance with one or more embodiments of the present invention.

### DETAILED DESCRIPTION OF THE ACCOMPANYING DRAWINGS

Fig. 1a illustrates a dual-purpose detent pin 106 and a part of a gearbox actuator 100 in accordance with an embodiment of the present invention.

Gearbox actuator 100 of an embodiment of the present invention includes a first external shaft 102, a second external shaft 104 positioned parallel to first external shaft 102, and a locking mechanism (not labeled in Fig. 1a) configured to prevent accidental horizontal movement of each of first and second external shafts 102, 104 and/or any relative accidental horizontal movement between first and second external shafts 102, 104 along their respective lateral axes LA1, LA2. The locking mechanism comprises dual-purpose detent pin 106, which will be explained below in detail.

According to the present invention, said each of first and second external shafts 102, 104 comprises at least two crest-like 115, 117 and at least two trough-like sections 116, 118 on its outer or external surface 122. In accordance with one embodiment, which can also be common for all the embodiments of the present invention, external surface 122 and its shape at crest and trough-like sections as labeled as 115, 116, 117, 118, 120 of first external shaft 102 is same as that of external surface 122 of second external shaft 102. It is for this reason, different reference signs is not used for each of these elements labeled on external shafts 102 and 104. It may very well be understood that, in accordance with a preferred embodiment, external surface 122 of first external shaft 102 does not have to have same shape and features as that of the external surface of second external shaft 104.

It is noted that it is the shape and features such as the crest and trough-like sections 115, 116, 117, 118 and 120 on external surface 122 of first and second external shafts 102, 104 equally along with dual-purpose detent pin 106 are configured to prevent accidental horizontal movement of each of first and second external shafts 102, 104 and/or any relative accidental horizontal movement between first and second external shafts 102, 104 along their respective lateral axes LA1, LA2.

As can also be derived from Fig. 1a, a first crest-like section 115 of the each of first and second external shafts 102, 104 is separated from a second crest-like section 117 of the each of first and second external shafts 102, 104 by a first trough-like section 116. In the present embodiment, optionally, a first diameter α₁ of shaft 102 or α₄ of shaft 104 of the each of first and second external shafts 102, 104 at first crest-like section(s) 115 is different from a second diameter α₂ at shaft 102 or α₅ of shaft 104 at second crest-like section(s) 117 of each of first and second external shafts 102, 104.

It is the difference in diameters at specific locations along shafts 102 and 104, among other factors which will be discussed in conjunction with Fig. 1b, causes compression and elongation of spring 112.

Dual-purpose detent pin 106 of the present embodiment, comprises two linearly reciprocating detent balls 108a and 108b capable of linearly reciprocating along a vertical axis VA and are provided at opposite ends of dual-purpose detent pin 106. Dual-purpose detent pin 106 also includes a first and second holding structures 110a 110b or holding the two linearly reciprocating detent balls 108a and 108b, respectively and are capable of linearly reciprocating along the vertical axis VA. In an embodiment, first and second holding structures 102 and are capable of linearly reciprocating along the vertical axis VA in tandem with two linearly reciprocating detent balls 108a and 108b.

Furthermore, dual-purpose detent pin 106 of the present embodiment further comprises a spring 112 being in contact with both first and second holding structures 110a and 110b, and is configured to allow a pre-determined range of linearly reciprocating opposing motion of at least one of first and second holding structures 110a 110b and at least one of the two linearly reciprocating detent balls 108a and 108b along vertical axis VA. In accordance with an embodiment, instead of a single spring, two springs may be provided between first and second holding structures 110a and 110b. In a special implementation, a double helical compression spring or a coil spring may be used between first and second holding structures 110a and 110b.

The technical advantage of dual-purpose detent pin 106 according to the present embodiment as explained above is that a single detent pin is used to prevent accidental (linear) movement of e.g., two shafts (108a and 108b) or gearshift rods (108a and 108b) provided in gearbox actuator 100 either separately or relative to each other.

In real-time application or use, as may also become apparent in the discussion of the further advantageous embodiments, dual-purpose detent pin 106 prevents accidental engagement of the incorrect gears (i.e., the gear not chosen by the vehicle operator) in a vehicle transmission caused due to the movement of the shafts (e.g., likes the ones shown in Fig. 1a with reference signs 102 and 104) associated with e.g., two separate pneumatic actuators in either of the directions (such as the ones parallel to the lateral axis LA1 or LA2) of their movement. Such accidental movements of the shafts or rods associated with the pneumatic actuators of the gearbox may happen due faulty actuation of solenoid valves (not shown in any of the accompanying figures) that control the flow of pressurized air into and out of the pneumatic actuators (not shown in any of the accompanying figures). Needless to say, as an element of fool-proof design of the gearbox actuators (at least part of which is shown in fig. 1a with reference sign "100") that such accidental movements of the shafts associated with the pneumatic actuators should be prevented. Dual-purpose detent pin 106 of the present invention according to claim 1 enables such fool-proof design in accordance with the present embodiment of the invention.

In accordance with one or more embodiments of the present application, spring 112 can be a constant rate spring (where the stiffness is constant along the length of the spring) or a variable rate spring (where the stiffness varies along the length of the spring). For instance, the springs with variable rate may provide the technical advantage of providing more or less compression at one end (e.g., one vertical end along axis 'VA' in Fig. 1a) of dual-purpose detent pin 106 in comparison to another end of (e.g., other vertical end along axis 'VA' in Fig. 1a).

It may be understood that only part of gearbox actuator 100 is shown in Fig. 1a. For instance, just for the clarity, it is reiterated that the shafts 102 and 104 are the ones that extend from the pneumatic actuators that are for gear-shifting and gear-selection purposes. For instance, each of said pneumatic actuators can be two or three-position cylinders, depending the type of vehicle and/or vehicle gearbox that they are associated with. What may however be clear is, when one of the gears of the vehicle gearbox is engaged with and the driver or vehicle operator does not intend on changing this, there should be no "accidental" actuation occurring.

Furthermore, in accordance with the present embodiment, first and second holding structures 110a, 110b are separated by a predetermined gap (g₀), when spring 112 is in an extended state. For instance, for the sake of illustration, it is noted spring 112 enables that the predetermined gap in accordance the present embodiment to be g₀ because first and second linearly reciprocating detent balls 108a and 108b are positioned at a first and a second trough-like section 116 and 118 on at least external surface 122 of first external shaft 102. Due to the dip at first and second trough-like sections 116 and 118, it is to be understood that spring 112 is at an extended state.

In the same embodiment, dual-purpose detent pin 106 further comprises an external sleeve 114 to orient or align the two linearly reciprocating detent balls 108a, 108b, first and second holding structures 110a, 110b, and spring 112 along the vertical axis (VA). For instance, external sleeve 114 that is discussed within the context of the present embodiment may simply be provided to keep two linearly reciprocating detent balls 108a and 108b and the first and second holding structures 110a and 110b along the vertical axis.

During the use of dual-purpose detent pin 106 of the present embodiment, dual-purpose detent pin 106 is configured to prevent horizontal movement of at least one of two external shafts 102, 104 along their respective lateral axes LA1, LA2 depending on a relative axial position of one of the two external shafts 102, 104 along its lateral axis LA1 with respect to the axial position of the other of the two external shafts 102, 104 along its lateral axis LA2. For instance, see Fig. 1a, which is under discussion for explaining this current embodiment, in which a first bottom surface 102b of first external shaft 102 is directly in alignment with a second bottom surface 104b of second external shaft 102. This denotes that the relative axial positions of first external shaft 102 and second external shaft 104 are aligned with each other. This relative axial position is displayed in Fig. 1a with the help of reference P₀. Incidentally, first linearly reciprocating detent ball 108a as shown in Fig. 1a is positioned at a second trough-like section 118 of first external shaft 102 and second linearly reciprocating detent ball 108b is positioned at second trough-like section 118 of second external shaft 102.

In accordance with the present embodiment, the relative axial position of one of the two external shafts i.e., first external shaft 102 with respect to the other i.e., second external shaft 104 along its respective lateral axis LA1 or LA2 or a relative difference in their respective axial positions along their respective lateral axes LA1, LA2 is correlated with the measure of physical distance between corresponding bottom surfaces 102b, 104b of the two external shafts 102, 104.

In real-time gearbox application, the relative position P₀ as indicated in Fig. 1a and the position of first and second linearly reciprocating detent balls 108a and 108b at second tough-like section(s) 118 of first and second external shafts may indicate a "neutral" gear position. Thus, when the vehicle transmission or the gearbox is engaged in the neutral gear at which state the engine transmission output is not transferred to a driven shaft within the gearbox, the relative position of first and second external shafts 102 and 104 of the pneumatic actuators (not shown) referred as P₀ is observed.

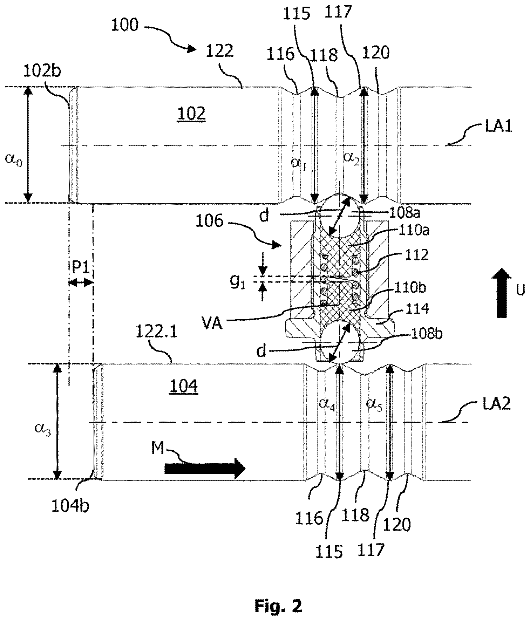

Further positions that are possible and the relative positions P1, P2 and P3 are explained within the contexts of Figs. 2, 3, 4.

Still furthermore, two linearly reciprocating detent balls 108a, 108b of dual-purpose detent pin 106 are configured to be in transitory contact with at least one of said crest-like sections 115, 117 and with at least one of trough-like sections 116, 118 of first and second external shafts 102, 104, respectively, when the axial position of at least one of first and second external shafts 102, 104 changes with respect to another of first and second external shafts 102, 104, and wherein spring 112 is compressed when at least one of two linearly reciprocating detent balls 108a, 108b is moving from one of trough-like sections towards or is at one of crest-like sections 115, 117 of first second external shafts 102, 104. The technical purpose of enabling this transitory contact with crest-like and trough-like sections of first and second external shafts 102, 104 will become apparent with the explanation provided in conjunction with Figs. 2, 3 and 4.

In the same embodiment, a gap g₀ (c.f. Fig. 1a) between first and second holding structures 110a and 110b of dual-purpose detent pin 106 is shown, which gap g₀ depending on the relative positions of first and second external shafts 102 and 104. One of the technical advantages, as will be understood within the scope of the present invention, is to provide this varying gap between two holding structures 102 and 104 such that the compression of spring 112 between two holding structures 102 and 104 are only allowed to an extent whereas the compression (of spring 112) beyond a certain threshold of gap will either result in blocking of the relative movement between two external shafts 102 and 104 or in allowing said relative movement.

Working principle of the present invention will be explained herewith to the extent that it can be done with the help of assistance to what is disclosed in Fig. 1a. However, it be noted that this working principle will become further clearer when the explanation for Figs. 1b, 2, 3 and 4 are provided.

As can be taken from Fig. 1a, first and second external shafts 102 and 104 are positioned parallel to each other as shown representatively with the help of lateral axes LA1 and LA2. Each of first and second external shafts 102 and 104 are connected to two pneumatic actuators (not shown in the accompanying Figures). Each of the two pneumatic actuators can serve individual purposes. For instance, one of the two pneumatic actuators can be a first "shift" actuator (e.g., responsible for gear shift; not shown in the figures) that is dedicated for shifting between second and third gears whereas the other of the two pneumatic actuators can be a second "shift" actuator (not shown in the figures) that is responsible for shifting between first and reverse gears.

Thus, by using dual-purpose detent pin 106 according to the present invention, a mechanical interlock system (or simply a locking system) is implemented between the first shift actuator that is responsible for first and reverse gears and the second shift actuator that is responsible for shifting between the second and third gears. This mechanical interlock system (or the locking system) allows some movement of the opposite gear of the one engaged, but during an engaging action of the second or third gears, any movement on the shaft from the actuator responsible for engaging the first and reverse gears is blocked.

It may be understood that one of the technical advantages of dual-purpose detent pin 106 according to the present invention is that it not only prevents the linear movement which are undesired in one shaft, but also the undesired relative linear movement between two shafts. By this way, the accidental or undesired engagement or change of the gears is prevented in a fool proof manner.

Furthermore, in order to achieve the above-mentioned effect or technical advantage following list of non-exclusive parameters, among others, may be carefully considered:
1. diameter (d) of detent balls 108a and 108b;
2. diameter(s) of first and second external shafts 102 and 104 at crest-like sections 115, 117 i.e., α₁, α₂, α₄, α₅;
3. radius of curvatures (r₀, r₁, r₂ from e.g., Fig. 1b) at crest-like (115, 117) and trough-like sections (116, 118, 120);
4. diameter(s) (α₀, α₃) of first and second external shafts 102, 104;
5. thicknesses (t₀, t₁, t₂) at trough-like sections 116, 118, 120;
6. the gap between first and second holding structures 110a and 110b.

Further details of the parameters associated with enabling the locking mechanism as discussed above, will also become apparent in the discussion in relation to Fig. 1b.

Generally, when a gear shift is requested by an operator of the vehicle, one of first and second external shafts 102 and 104 are moved along their respective lateral axes LA1 and LA2, respectively. In accordance with the present embodiment, the engaged gear is neutral and the relative positions of shafts 102 and 104 reflect that in that bottom surfaces 102b and 104b of first and second shafts 102 and 104 are aligned with respect to each other as indicated at P0 in Fig. 1a. At this relative position of neutral, first and second linearly reciprocating detent balls 108a and 108b are positioned at trough-like section 118 (see Fig. 1a). Thus, when a gear change occurs, one or both detent balls 108a and 108b roll(s) along an external surface 122 and compress spring 112 as they move towards at least one of crest-like sections 115, 117. However, the compression of spring 112 has a limit in that it occurs in so far as the gap (see e.g., g0) exists between first and second holding structures 110a and 110b. This gap between first and second holding structures 110a and 110b is carefully designed such that not relative movements between first and second external shafts 102 and 104 (see, e.g., Fig. 4).

Fig. 1b illustrates a section of second external shaft 104 of gearbox actuator 100 in accordance with an embodiment of the present invention.

In particular, section "1b" from Fig. 1a is shown in an enlarged manner in Fig. 1b. As can be noticed, trough-like sections 116, 118, 120 as well as crest-like sections 115, 117 are shown in a closer view. It should be noted that this is only an exemplary illustration.

In accordance with the embodiment disclosed in Fig. 1b, only section 1b of Fig. 1a at second external shaft 104 is displayed. However, it must be understood similar parameters will come into picture also within the design of the corresponding section at first external shaft 102. In other words, the parameters discussed herein is not only applicable to second external shaft 104, but may also be applicable to first external shaft 102 within the scope of the present application.

As can be noticed from Fig. 1b, each trough-like section 116, 118 and 120 are shown to have unique radius r₀, r₁ and r₂, but at least two trough-like sections 116, 118 and 120 can have different radii in comparison to each other. The radius of each of trough-like sections 116, 118 and 120 contribute to either directly or indirectly and at least to an extent whether a linear movement of one of shafts 102, 104 or its relative movement with the other is allowed or should be locked.

In Fig. 1b, furthermore, angles of inclinations θ₀, θ₁, θ₂, θ₃, θ₄, and θ₅ of opposite inclined surfaces 116.1, 116.2, 118.1, 118.2, 120.1, and 120.2 associated with each of trough-like sections 116, 118 and 120, respectively. Said of angles of inclinations θ₀, θ₁, θ₂, θ₃, θ₄, and θ₅ are illustrated taking a horizontal surface or external surface 122.1 of second shaft 104 as a reference horizontal line/plane. As would one decipher from Fig. 1b, said angles of inclinations of each of the opposing surfaces of trough-like sections 116, 118 and 120 has a direct effect on what e.g., depths or thicknesses (t₀, t₁, tz) at trough-like sections 116, 118, 120 with reference to surface 122.1. By controlling each of these parameters or one or more of these parameters including the angles of inclinations of the opposite inclined surfaces, radii of curvature, and the thicknesses, the present invention, in an exemplary illustration, provides a precise control or fool proof provision of preventing whether one or more of detent balls 108a and 108b rolls over from one trough-like section 118 (as shown in Fig. 1a) to another trough-like section (see Figs. 2 and 3) or not (see Fig. 4).

Moreover, the present embodiment provides for the option, in that radius of curvature r₀, r₁, or r₂ and/or a depth/ thickness to, t₁, t₂ and/or each of opposite inclined surfaces' 116.1, 116.2, 118.1, 118.2, 120.1, and 120.2 angle of inclination θ₀, θ₁, θ₂, θ₃, θ₄, and θ₅ at each of the at least two trough-like sections 116, 118 of the each of the first and second external shafts 102, 104 is different from or same as the other. Such a variety of parameters to control the blocking of the relative movement between shafts 102 and 104 and/or individual linear movement of shafts 102 and 104 along their respective lateral axes LA1 and LA2 provides a gear actuator designer with a tremendous amount of options in arriving at an optimal solution.

Figs. 2 to 4 illustrates of working of a dual-purpose detent pin within gearbox actuator 100 in accordance with one or more embodiments of the present invention.

Fig. 2, in accordance with an embodiment, shows a transitory movement of second external shaft 104 as shown with the help of arrow mark "M" whereas first external shaft 102 is stationary or immobile at that point. Due to its movement along direction "M" along lateral axis LA2, second external shaft 104 compresses spring 112 due to the linearly reciprocating movement of second linearly reciprocating detent ball 108b along a vertical axis VA in an upper direction. To illustrate the movement of second linearly reciprocating detent ball 108b along vertical axis VA, the upper direction is marked in Fig. 2 with the arrow mark "U" so that its clear on what is actually mean by the "upper direction". In accordance with the present invention, the upper direction "U" can be understood to be as a direction that indicates starting from second external shaft 104 and pointing towards first external shaft 102, and at the same time is perpendicular to lateral axis LA2 or LA1. Thus, second linearly reciprocating detent ball 108 is shown "half-way" through the movement of second external shaft 104 when a gear shift is occurring.

It should be noted that, at this stage, gap "g₁" between first and second holding structures 110a and 110b is reduced or lesser in magnitude (millimeters 'mm') in comparison to gap "g₀" of Fig. 1a, but is not entirely "zero" or 0 mm. Such a state would indeed allow further movement of second external shaft 104 along axis LA2 in the direction "M". The resulting position is shown or indicated in Fig. 3 where second linearly reciprocating detent ball 108b is positioned at first trough-like section 116 of second external shaft 104. As is also noticeable the relative horizontal position P1 between first and second external shafts 102 and 104 of Fig. 2 has changed in Fig. 3 with the newer relative horizontal position P2. In other words, the distance between bottom faces 102b and 104b of first and second external shafts 102 and 104 has increased due to horizontal movement of second external shaft 104 purely by comparing the relative positions of said shafts in Figs. 2 and 3.

For instance, in accordance with an embodiment, the relative movement of shafts 102 and 104 can result in shifting gears from a second to third gear in the gearbox (not shown in the figures). However, it should be noticed that, during such a shift of gear, the movement of first external shaft 102 along direction "M" of as shown in Fig. 4 should be stopped.

This is achieved as shown in Fig. 4 where first external shaft 102's movement "M" along lateral axis LA1 is prevented because when the transitionary movement of first linearly reciprocating ball 108a occurs, while moving from second trough-like section 118 to first trough-like section 116, the gap g₃ has already become "0 mm" (see Fig. 4). The rolling point where the transitory contact of first linearly reciprocating ball 108a is stopped is indicated with a reference sign 400 in Fig. 4.

Alternatively explained, in the present embodiment, the gap (g3) between the first and second holding structures 110a, 110b becomes "0 mm" or no gap situation occurs, when first of two linearly reciprocating detent balls i.e., 108a of balls 108a, 108b is initially engaged with second trough-like section 118 of first external shaft 102, and when the linear translatory motion of first external shaft 102 in a first direction M parallel to the respective lateral axis LA1 occurs such that first of the two linearly reciprocating detent balls i.e., 108a is made to roll towards first crest-like section 115 or a first trough-like section 116 of first external shaft 102.

Due the above-mentioned scheme of operation or sequence of operations, dual purpose detent pin 106 of the present inventing, being part of gearbox actuator 100 or its locking mechanism, prevents accidental horizontal movement of each of first and second external shafts 102, 104 and/or any relative accidental horizontal movement between first and second external shafts 102, 104 along their respective lateral axes LA1, LA2.

The present invention relates also to a vehicle gearbox according to claim 10, a commercial vehicle according to claim 11 and the use of the claimed gearbox actuator according to claim 12.

### List of reference signs (part of the description)

100 - gearbox actuator102 - first external shaft
102b - first bottom surface of first external shaft 102
104 - second external shaft
104b - second bottom surface of second external shaft 104
106 - dual-purpose detent pin
108a and 108b - first and second linearly reciprocating detent balls
110a and 110b - first and second holding structures
112 - spring
114 - external sleeve
115, 117 - crest-like sections (or first and second crest-like sections)
116, 118, 120 - trough-like sections (or first, second and third trough-like sections, respectively)
116.1, 116.2 - opposite inclined surfaces of trough-like section 116
118.1, 118.2 - opposite inclined surfaces of trough-like section 118
120.1, 120.2 - opposite inclined surfaces of trough-like section 120
122 - external or outer surface of first external shaft 102
122.1 - external or outer or horizontal surface of second external shaft 104
400 - a rolling point where the transitory contact of first linearly reciprocating ball 108a is stopped is indicated in Fig. 4
1b - section from Fig. 1a, which section is shown in a magnified manner in Fig. 1b α₀, α₁, α₃, α₄, α₅ - diameter of corresponding sections of first and second external shafts 102 and 104
θ₀, θ₃, - angle of inclinations of surfaces 116.1 and 116.2 with respect to surface 122.1
θ₁, θ₄, - angle of inclinations of surfaces 118.1 and 118.2 with respect to surface 122.1
θ₂, θ₅ - angle of inclinations of surfaces 120.1 and 120.2 with respect to surface 112.1
P0 - relative position, an indicator of distance between first and second bottom surfaces 102b and 104b in Fig. 1a
P1 - relative position, an indicator of distance between first and second bottom surfaces 102b and 104b in Fig. 2
P2 - relative position, an indicator of distance between first and second bottom surfaces 102b and 104b in Fig. 3
P3 - relative position, an indicator of distance between first and second bottom surfaces 102b and 104b in Fig. 4
VA - vertical axis along dual-purpose detent pin 106
g₀, g₁, g₂, g₃ - gap between first and second holding structures 110a, 110b in Figs. 1a, 2, 3, 4, respectively
LA1, LA2 - lateral axes along shafts 102, 104, respectively
t₀, t₁, t₂ - thicknesses as shown in Fig. 1b
r₀, r₁, r₂ - radius of curvatures as shown in Fig. 1b
U - arrow mark denoting upper direction relative to axis 'VA'
M - arrow mark indicating a direction of movement of the shaft (either 102 or 104) on which it is present

## Claims

1. A gearbox actuator (100), comprising
a first external shaft (102),
a second external shaft (104) positioned parallel to the first external shaft (102), and
a locking mechanism configured to prevent accidental horizontal movement of each of the first and second external shafts (102, 104) and/or any relative accidental horizontal movement between the first and second external shafts (102, 104) along their respective lateral axes (LA1, LA2),
wherein the locking mechanism comprises a dual-purpose detent pin (106), comprising
two linearly reciprocating detent balls (108a, 108b) capable of linearly reciprocating along a vertical axis (VA), and being provided at opposite ends of the dual-purpose detent pin (106),
a first and second holding structures (110a, 110b) for holding the two linearly reciprocating detent balls (108a, 108b), respectively and are capable of linearly reciprocating along the vertical axis (VA), and
wherein the dual-purpose detent pin (106) further comprises
a spring (112) being in contact with both the first and second holding structures (110a, 110b), and is configured to allow a pre-determined range of linearly reciprocating opposing motion of at least one of the first and second holding structures (110a, 110b) and at least one of the two linearly reciprocating detent balls (108a, 108b) along the vertical axis (VA), wherein the each of the first and second external shafts (102, 104) comprises at least two crest-like (115, 117) and at least two trough-like (116, 118) sections on its outer surface (122) wherein a first crest-like section (115) of the each of the first and second external shafts (102, 104) is separated from a second crest-like section (117) of the each of the first and second external shafts (102, 104) by a first trough-like section (116), and
**characterized in that**, a first diameter (α₁ or α₄) of the each of the first and second external shafts (102, 104) at the first crest-like section(s) (115) is different from a second diameter (α₂ or α₅) at the second crest-like section(s) (117) of the each of the first and second external shafts (102, 104).

2. The gearbox actuator (100) according to claim 1, wherein the first and second holding structures (110a, 110b) are separated by a predetermined gap (g₀), when the spring (112) is in an extended state.

3. The gearbox actuator (100) according to claim 1 or claim 2, wherein the dual-purpose detent pin (106) further comprises an external sleeve (114) to orient or align the two linearly reciprocating detent balls (108a, 108b), the first and second holding structures (110a, 110b), and the spring (112) along the vertical axis (VA).

4. The gearbox actuator (100) according to any one of claims 1 to 3, wherein the dual-purpose detent pin (106) is configured to prevent horizontal movement of at least one of two external shafts (102; 104) along their respective lateral axes (LA1, LA2) depending on a relative axial position of one of the two external shafts (102; 104) along its lateral axis (LA1) with respect to the axial position of the other of the two external shafts (102; 104) along its lateral axis (LA2).

5. The gearbox actuator (100) according to claim 4, wherein the relative axial position of one of the two external shafts (102, 104) with respect to the other along its respective lateral axis (LA1 or LA2) or a relative difference in their respective axial positions along their respective lateral axes (LA1, LA2) is correlated with the measure of physical distance (P0; P1; P2; P3) between corresponding bottom surfaces (102b, 104b) of the two external shafts (102, 104).

6. The gearbox actuator according to claim 1, wherein a radius of curvature (r₀, r₁, r₂) and/or a depth/ thickness (t₀, t₁, t₂) and/or an angle of inclination (θ₀, θ₁, θ₂, θ₃, θ₄, and θ₅) of each of opposite inclined surfaces (116.1, 116.2, 118.1, 118.2, 120.1, and 120.2) at each of the at least two trough-like sections (116, 118) of the each of the first and second external shafts (102, 104) is different from or same as the other.

7. The gearbox actuator according to claim 1, wherein the two linearly reciprocating detent balls (108a, 108b) of the dual-purpose detent pin (106) are configured to be in transitory contact with at least one of said crest-like sections (115, 117) and with at least one of said trough-like sections (116, 118) of the first and second external shafts (102, 104), respectively, when the axial position of at least one of the first and second external shafts (102, 104) changes with respect to another of the first and second external shafts (102, 104), and
wherein the spring (112) is compressed when at least one of the two linearly reciprocating detent balls (108a, 108b) is moving from one of the trough-like sections towards or is at one of the crest-like sections (115, 117) of the first second external shafts (102, 104).

8. The gearbox actuator according to any one of claims1, 6 or 7, wherein a gap (g₀, g₁, g₂, g₃) between the first and second holding structures (110a, 110b) of the dual-purpose detent pin (106) vary depending on the relative positions of the first and second external shafts (102, 104).

9. The gearbox actuator of claim 8 to the extent it is dependent on at least claim 1, wherein the gap (g3) between the first and second holding structures (110a, 110b) becomes "0 mm" (no gap situation occurs),
when a first (108a) of the two linearly reciprocating detent balls (108a, 108b) is initially engaged with a second trough-like section (118) of the first external shaft (102), and
when the linear translatory motion of the first external shaft (102) in a first direction (M) parallel to the respective lateral axis (LA1) occurs such that the first (108a) of the two linearly reciprocating detent balls (108a, 108b) is made to roll towards a first crest-like section (115) or a first trough-like section (116) of the first external shaft (102).

10. A vehicle gearbox comprising the gearbox actuator as claimed in any one of claims 1 to 9.

11. A commercial vehicle comprising the vehicle gearbox as claimed in claim 10.

12. Use of the gearbox actuator as claimed in any one of claims 1 to 9 in a vehicle gearbox of a commercial vehicle.

## Patentansprüche

1. Getriebeaktuator (100), umfassend
eine erste Außenwelle (102),
eine zweite Außenwelle (104), die parallel zu der ersten Außenwelle (102) positioniert ist, und
einen Verriegelungsmechanismus, der konfiguriert ist, um eine unbeabsichtigte horizontale Bewegung jeder der ersten und der zweiten Außenwelle (102, 104) und/oder eine beliebige relative unbeabsichtigte horizontale Bewegung zwischen der ersten und der zweiten Außenwelle (102, 104) entlang ihrer jeweiligen Querachsen (LA1, LA2) zu verhindern,
wobei der Verriegelungsmechanismus einen Doppelzweckraststift (106) umfasst, umfassend
zwei linear hin- und hergehende Rastkugeln (108a, 108b), die in der Lage sind, sich entlang einer vertikalen Achse (VA) linear hin- und herzubewegen, und an entgegengesetzten Enden des Doppelzweckraststifts (106) bereitgestellt sind,
eine erste und eine zweite Haltestruktur (110a, 110b) zum Halten jeweils der zwei linear hin- und hergehenden Rastkugeln (108a, 108b) und die in der Lage sind, sich linear entlang der vertikalen Achse (VA) hin- und herzubewegen, und
wobei der Doppelzweckraststift (106) ferner umfasst
eine Feder (112), die sowohl mit der ersten als auch mit der zweiten Haltestruktur (110a, 110b) in Kontakt steht und konfiguriert ist, um einen zuvor bestimmten Bereich einer linear hin- und hergehenden entgegengesetzten Bewegung von mindestens einer der ersten und der zweiten Haltestruktur (110a, 110b) und mindestens einer der zwei linear hin- und hergehenden Rastkugeln (108a, 108b) entlang der vertikalen Achse (VA) zu ermöglichen, wobei jede der ersten und der zweiten Außenwelle (102, 104) mindestens zwei kammartige (115, 117) und mindestens zwei trogartige (116, 118) Abschnitte auf ihrer äußeren Oberfläche (122) umfasst, wobei ein erster kammartiger Abschnitt (115) jeder der ersten und der zweiten Außenwelle (102, 104) von einem zweiten kammartigen Abschnitt (117) jeder der ersten und der zweiten Außenwelle (102, 104) durch einen ersten trogartigen Abschnitt (116) getrennt ist, und
**dadurch gekennzeichnet, dass** sich ein erster Durchmesser (α₁ oder α₄) jeder der ersten und der zweiten Außenwelle (102, 104) an dem/den ersten kammartigen Abschnitt(en) (115) von einem zweiten Durchmesser (α₂ oder α₅) an dem/den zweiten kammartigen Abschnitt(en) (117) der jeweiligen der ersten und der zweiten Außenwelle (102, 104) unterscheidet.

2. Getriebeaktuator (100) nach Anspruch 1, wobei die erste und die zweite Haltestruktur (110a, 110b) durch einen zuvor bestimmten Abstand (g₀) getrennt sind, wenn sich die Feder (112) in einem ausgedehnten Zustand befindet.

3. Getriebeaktuator (100) nach Anspruch 1 oder 2, wobei der Doppelzweckraststift (106) ferner eine Außenhülse (114) umfasst, um die zwei linear hin- und hergehenden Rastkugeln (108a, 108b), die erste und die zweite Haltestruktur (110a, 110b) und die Feder (112) entlang der vertikalen Achse (VA) zu orientieren oder auszurichten.

4. Getriebeaktuator (100) nach einem der Ansprüche 1 bis 3, wobei der Doppelzweckraststift (106) konfiguriert ist, um eine horizontale Bewegung von mindestens einer von zwei Außenwellen (102; 104) entlang ihrer jeweiligen Querachsen (LA1, LA2) abhängig von einer relativen axialen Position einer der zwei Außenwellen (102; 104) entlang ihrer Querachse (LA1) in Bezug auf die axiale Position der anderen der zwei Außenwellen (102; 104) entlang ihrer Querachse (LA2) zu verhindern.

5. Getriebeaktuator (100) nach Anspruch 4, wobei die relative axiale Position einer der zwei Außenwellen (102, 104) in Bezug auf die andere entlang ihrer jeweiligen Querachse (LA1 oder LA2) oder ein relativer Unterschied ihrer jeweiligen axialen Positionen entlang ihrer jeweiligen Querachsen (LA1, LA2) mit dem Maß von physikalischer Distanz (P0; P1; P2; P3) zwischen entsprechenden Bodenoberflächen (102b, 104b) der zwei Außenwellen (102, 104) korreliert.

6. Getriebeaktuator nach Anspruch 1, wobei ein Krümmungsradius (r₀, r₁, r₂) und/oder eine Tiefe/Dicke (t₀, t₁, t₂) und/oder ein Neigungswinkel (θ₀, θ₁, θ₂, θ₃, θ₄ und θ₅) jeder von entgegengesetzten geneigten Oberflächen (116.1, 116.2, 118.1, 118.2, 120.1 und 120.2) an jedem der mindestens zwei trogartigen Abschnitte (116, 118) jeder der ersten und der zweiten Außenwelle (102, 104) unterschiedlich oder gleich dem/der anderen ist.

7. Getriebeaktuator nach Anspruch 1, wobei die zwei linear hin- und hergehenden Rastkugeln (108a, 108b) des Doppelzweckraststifts (106) konfiguriert sind, um in vorübergehendem Kontakt mit mindestens einem der kammartigen Abschnitte (115, 117) und mit mindestens einem der trogartigen Abschnitte (116, 118) der ersten und der zweiten Außenwelle (102, 104) zu stehen, wenn sich die axiale Position von mindestens einer der ersten und der zweiten Außenwelle (102, 104) in Bezug auf eine andere der ersten und der zweiten Außenwelle (102, 104) ändert, und
wobei die Feder (112) zusammengedrückt wird, wenn sich mindestens eine der zwei linear hin- und hergehenden Rastkugeln (108a, 108b) von einem der trogartigen Abschnitte in Richtung eines der kammartigen Abschnitte (115, 117) der ersten zweiten Außenwellen (102, 104) bewegt oder sich an diesem befindet.

8. Getriebeaktuator nach einem der Ansprüche 1, 6 oder 7, wobei ein Spalt (g₀, g₁, g₂, g₃) zwischen der ersten und der zweiten Haltestruktur (110a, 110b) des Doppelzweckraststifts (106) abhängig von den relativen Positionen der ersten und der zweiten Außenwelle (102, 104) variieren.

9. Getriebeaktuator nach Anspruch 8, soweit er mindestens von Anspruch 1 abhängig ist, wobei der Spalt (g3) zwischen der ersten und der zweiten Haltestruktur (110a, 110b) "0 mm" wird (keine Spaltsituation auftritt),
wenn eine erste (108a) der zwei linear hin- und hergehenden Rastkugeln (108a, 108b) zunächst mit einem zweiten trogartigen Abschnitt (118) der ersten Außenwelle (102) in Eingriff steht, und
wenn die lineare Translationsbewegung der ersten Außenwelle (102) in einer ersten Richtung (M) parallel zu der jeweiligen Querachse (LA1) derart auftritt, dass die erste (108a) der zwei linear hin- und hergehenden Rastkugeln (108a, 108b) dazu gebracht wird, in Richtung eines ersten kammartigen Abschnitts (115) oder eines ersten trogartigen Abschnitts (116) der ersten Außenwelle (102) zu rollen.

10. Fahrzeuggetriebe, umfassend den Getriebeaktuator nach einem der Ansprüche 1 bis 9.

11. Nutzfahrzeug, umfassend das Fahrzeuggetriebe nach Anspruch 10.

12. Verwendung des Getriebeaktuators nach einem der Ansprüche 1 bis 9 in einem Fahrzeuggetriebe eines Nutzfahrzeugs.

## Revendications

1. Actionneur de boîte de vitesses (100), comprenant
un premier arbre externe (102),
un second arbre externe (104) positionné parallèlement au premier arbre externe (102) et
un mécanisme de verrouillage conçu pour empêcher tout déplacement horizontal accidentel de chacun des premier et second arbres externes (102, 104) et/ou tout déplacement horizontal accidentel relatif entre les premier et second arbres externes (102, 104) le long de leurs axes latéraux respectifs (LA1, LA2),
le mécanisme de verrouillage comprenant une cheville d'arrêt à double fonction (106), comprenant
deux billes de verrouillage à mouvement alternatif linéaire (108a, 108b), pouvant effectuer un mouvement alternatif linéaire le long d'un axe vertical (VA) et placées au niveau d'extrémités opposées de la cheville d'arrêt à double fonction (106),
une première et une seconde structure de maintien (110a, 110b) destinées à maintenir les deux billes de verrouillage à mouvement alternatif linéaire (108a, 108b)respectivement et qui peuvent effectuer un mouvement alternatif linéaire le long de l'axe vertical (VA) et
la cheville d'arrêt à double fonction (106) comprenant en outre
un ressort (112) en contact avec à la fois la première et la seconde structure de maintien (110a, 110b) et conçu pour permettre une plage prédéterminée de mouvements alternatifs linéaires opposés d'au moins l'une des première et seconde structures de maintien (110a, 110b) et d'au moins l'une des deux billes de verrouillage à mouvement alternatif linéaire (108a, 108b) le long de l'axe vertical (VA), chacun des premier et second arbres externes (102, 104) comprenant au moins deux sections en forme de crête (115, 117) et au moins deux sections en forme d'auge (116, 118) sur sa surface extérieure (122), une première section en forme de crête (115) de chacun des premier et second arbres externes (102, 104) étant séparée d'une seconde section en forme de crête (117) de chacun des premier et second arbres externes (102, 104) par une première section en forme d'auge (116) et
**caractérisé en ce qu'**un premier diamètre (α₁ ou α₄) de chacun des premier et second arbres externes (102, 104) au niveau de la ou des premières sections en forme de crête (115) est différent d'un second diamètre (α₂ ou α₅) au niveau de la ou des secondes sections en forme de crête (117) de chacun des premier et second arbres externes (102, 104).

2. Actionneur de boîte de vitesses (100) selon la revendication 1, dans lequel les première et seconde structures de maintien (110a, 110b) sont séparées par un interstice prédéterminé (g₀), lorsque le ressort (112) est dans un état étendu.

3. Actionneur de boîte de vitesses (100) selon la revendication 1 ou la revendication 2, dans lequel la cheville d'arrêt à double fonction (106) comprend en outre un manchon externe (114) destiné à orienter ou à aligner les deux billes de verrouillage à mouvement alternatif linéaire (108a, 108b), les première et seconde structures de maintien (110a, 110b) et le ressort (112) le long de l'axe vertical (VA).

4. Actionneur de boîte de vitesses (100) selon l'une quelconque des revendications 1 à 3, dans lequel la cheville d'arrêt à double fonction (106) est conçue pour empêcher un déplacement horizontal d'au moins l'un des deux arbres externes (102 ; 104) le long de leurs axes latéraux respectifs (LA1, LA2) en fonction d'une position axiale relative de l'un des deux arbres externes (102 ; 104) le long de son axe latéral (LA1) par rapport à la position axiale de l'autre des deux arbres externes (102 ; 104) le long de son axe latéral (LA2).

5. Actionneur de boîte de vitesses (100) selon la revendication 4, dans lequel la position axiale relative de l'un des deux arbres externes (102, 104) par rapport à l'autre le long de son axe latéral respectif (LA1 ou LA2) ou une différence relative dans leurs positions axiales respectives le long de leurs axes latéraux respectifs (LA1, LA2) est corrélée avec la mesure de la distance physique (P0 ; P1 ; P2 ; P3) entre les surfaces inférieures correspondantes (102b, 104b) des deux arbres externes (102, 104).

6. Actionneur de boîte de vitesses selon la revendication 1, dans lequel un rayon de courbure (r₀, r₁, r₂) et/ou une profondeur/épaisseur (t₀, t₁, t₂) et/ou un angle d'inclinaison (θ₀, θ₁, θ₂, θ₃, θ₄ et θ₅) de chacune des surfaces inclinées opposées (116.1, 116.2, 118.1, 118.2, 120.1 et 120.2) de chacune des au moins deux sections en forme d'auge (116, 118) de chacun des premier et second arbres externes (102, 104) sont différents les uns des autres ou identiques les uns aux autres.

7. Actionneur de boîte de vitesses selon la revendication 1, dans lequel les deux billes de verrouillage à mouvement alternatif linéaire (108a, 108b) de la cheville d'arrêt à double fonction (106) sont conçues pour être en contact temporaire avec au moins l'une desdites sections en forme de crête (115, 117) et avec au moins l'une desdites sections en forme d'auge (116, 118) des premier et second arbres externes (102, 104) respectivement, lorsque la position axiale d'au moins l'un des premier et second arbres externes (102, 104) change par rapport à un autre des premier et second arbres externes (102, 104) et
le ressort (112) étant comprimé lorsqu'au moins l'une des deux billes de verrouillage à mouvement alternatif linéaire (108a, 108b) se déplace à partir de l'une des sections en forme d'auge vers l'une des sections en forme de crête (115, 117) des premier second arbres externes (102, 104) ou se trouve au niveau de l'une de ces sections.

8. Actionneur de boîte de vitesses selon l'une quelconque des revendications 1, 6 ou 7, dans lequel un interstice (g₀, g₁, g₂, g₃) entre les première et seconde structures de maintien (110a, 110b) de la cheville d'arrêt à double fonction (106) varie en fonction des positions relatives des premier et second arbres externes (102, 104).

9. Actionneur de boîte de vitesses selon la revendication 8 dans la mesure où elle dépend au moins de la revendication 1, dans lequel l'interstice (g3) entre les première et seconde structures de maintien (110a, 110b) devient « 0 mm » (aucune situation d'interstice ne se produit),
lorsqu'une première (108a) des deux billes de verrouillage à mouvement alternatif linéaire (108a, 108b) est initialement en prise avec une seconde section en forme d'auge (118) du premier arbre externe (102) et
lorsque le mouvement de translation linéaire du premier arbre externe (102) dans une première direction (M) parallèle à l'axe latéral respectif (LA1) se produit de telle sorte que la première (108a) des deux billes de verrouillage à mouvement alternatif linéaire (108a, 108b) est amenée à rouler vers une première section en forme de crête (115) ou vers une première section en forme d'auge (116) du premier arbre externe (102).

10. Boîte de vitesses de véhicule comprenant l'actionneur de boîte de vitesses selon l'une quelconque des revendications 1 à 9.

11. Véhicule utilitaire comprenant la boîte de vitesses de véhicule selon la revendication 10.

12. Utilisation de l'actionneur de boîte de vitesses selon l'une quelconque des revendications 1 à 9 dans une boîte de vitesses de véhicule d'un véhicule utilitaire.
